# FASCICULE DE BREVET EUROPEEN

(11) **EP 1 498 305 B1**
(45) Date de publication et mention de la délivrance du brevet: **15.11.2006**
(21) Numéro de dépôt: 04291770.8
(22) Date de dépôt: 12.07.2004
(51) Int. Cl.: B60N 2/70, F16B 2/24

(54) **Dispositif de fixation d'un coussin d'assise de siège arrière d'un véhicule automobile**
Befestigungsvorrichtung des Hintersitzkissens eines Kraftfahrzeuges.
Fastening device for a rear seat cushion of an automotive vehicle.

(30) Priorité: 18.07.2003 FR 0308813
(43) Date de publication de la demande: 19.01.2005
(73) Titulaire: Peugeot Citroën Automobiles S.A., 78140 Vélizy Villacoublay (FR)
(72) Inventeur: Gremillet, Eric, 70200 La Vergenne (FR)
(74) Mandataire: Thinat, Michel

(56) Documents cités:
- DE-A- 3 421 564
- FR-A- 2 667 275
- US-A- 3 915 493
- US-A- 4 822 092

## Description

La présente invention concerne un dispositif de fixation d'un coussin d'assise de siège arrière d'un véhicule automobile à la structure de ce véhicule.

Un tel dispositif est connu du document US-A-3915493.

Actuellement, les différentes opérations de montage d'un coussin d'assise à la structure d'un véhicule s'effectuent avec un outillage important, ce qui augmente le temps de montage des coussins d'assise sur la chaîne de montage.

La présente invention a pour but d'éliminer l'inconvénient ci-dessus en proposant un dispositif de fixation d'un coussin d'assise de siège arrière d'un véhicule automobile à la structure de ce véhicule, et qui est caractérisé en ce qu'il comprend au moins une épingle de fixation en fil rigide comportant une partie supérieure solidaire de l'armature interne du coussin et une branche inférieure en rampe élastiquement déformable raccordée à la partie supérieure par une partie formant épaulement, et une patte rigide solidaire de l'armature interne du coussin en regard de la branche inférieure de l'épingle dirigée vers la patte rigide, l'épingle pouvant être introduite avec la patte rigide dans une lumière de la structure du véhicule de manière que les bords d'extrémités de la lumière produisent une déformation élastique de la branche inférieure de l'épingle vers la patte rigide jusqu'à ce que la partie formant épaulement de l'épingle s'engage élastiquement sous le bord d'extrémité correspondant de la lumière pour bloquer l'épingle et la patte rigide dans la lumière.

De préférence, l'épingle est fixée par sa partie supérieure à une platine solidaire de l'armature interne du coussin et la patte rigide est formée par découpage de la platine.

Avantageusement, la partie supérieure de l'épingle est fixée à la platine par des éléments formant pattes et/ou brides de fixation réalisés par découpe et emboutissage de la platine.

La platine est fixée par soudage à l'armature interne du coussin en s'étendant sensiblement perpendiculairement au plan d'assise du coussin.

Le dispositif comprend avantageusement deux ensembles à épingles et pattes rigides de fixation de l'armature interne de la structure du véhicule situés d'un même côté arrière de cette armature et se verrouillant par encliquetage respectivement dans deux lumières de la structure espacées transversalement à la direction longitudinale du véhicule.

L'invention sera mieux comprise, et d'autres buts, caractéristiques, détails et avantages de celle-ci apparaîtront plus clairement au cours de la description explicative qui va suivre faite en référence aux dessins annexés donnés uniquement à titre d'exemple illustrant un mode de réalisation de l'invention et dans lesquels :

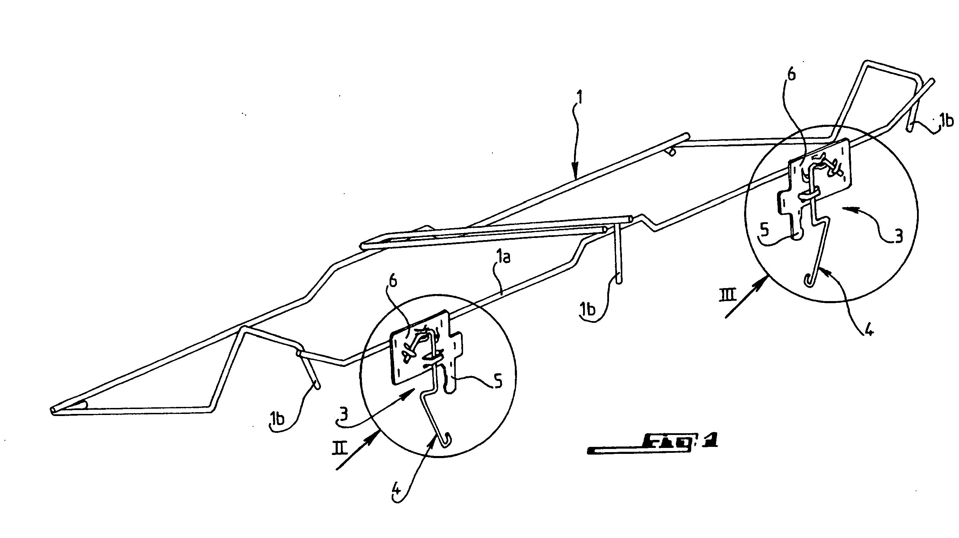

- la figure 1 est une vue en perspective d'une armature interne du coussin d'assise de siège arrière d'un véhicule automobile et comprenant deux ensembles conformes à l'invention permettant de fixer l'armature à la structure du véhicule ;
- la figure 2 est une vue agrandie d'un ensemble de fixation situé dans la partie cerclée en II de la figure 1;

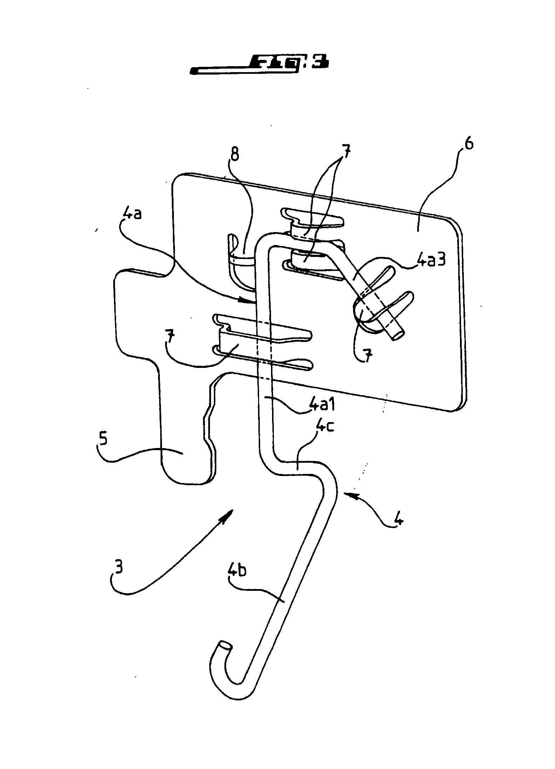

- la figure 3 est une vue de l'autre ensemble de fixation situé dans la partie cerclée en III de la figure 1 ; et
- la figure 4 est une vue en perspective représentant la fixation de l'armature de coussin d'assise à la structure du véhicule par l'ensemble de la figure 2.

En se reportant aux figures, la référence 1 désigne une armature métallique interne d'un coussin d'assise de siège arrière d'un véhicule automobile.

Le coussin d'assise, non représenté, enveloppe complètement l'armature interne 1.

Pour permettre la fixation du coussin d'assise à la structure 2 du véhicule, telle que par exemple une partie de plancher de ce véhicule, l'armature 1 est pourvue dans le cas présent de deux ensembles de fixation 3, chacun situé du côté arrière de l'armature 1.

Selon l'invention, chaque ensemble de fixation 3 comprend une épingle 4 en fil métallique rigide comportant une partie supérieure 4a solidaire de l'armature 1 et une branche inférieure élastiquement déformable en forme de rampe 4b raccordée à la partie supérieure 4a par une partie formant épaulement 4c.

L'épingle 4 s'étend dans un plan sensiblement perpendiculaire au plan d'assise du coussin et fait saillie en dessous de l'armature 1.

L'ensemble de fixation 3 comprend en outre une patte rigide 5 solidaire de l'armature 1 et située sensiblement dans le même plan que l'épingle 4 en regard de cette dernière.

La branche en rampe 4b de l'épingle 4 est dirigée vers l'axe longitudinal de la patte 5 qui fait saillie sous l'armature 1 dans le même sens que la rampe 4b de l'épingle 4. En outre, la branche 4b a une longueur supérieure à celle de la patte 5.

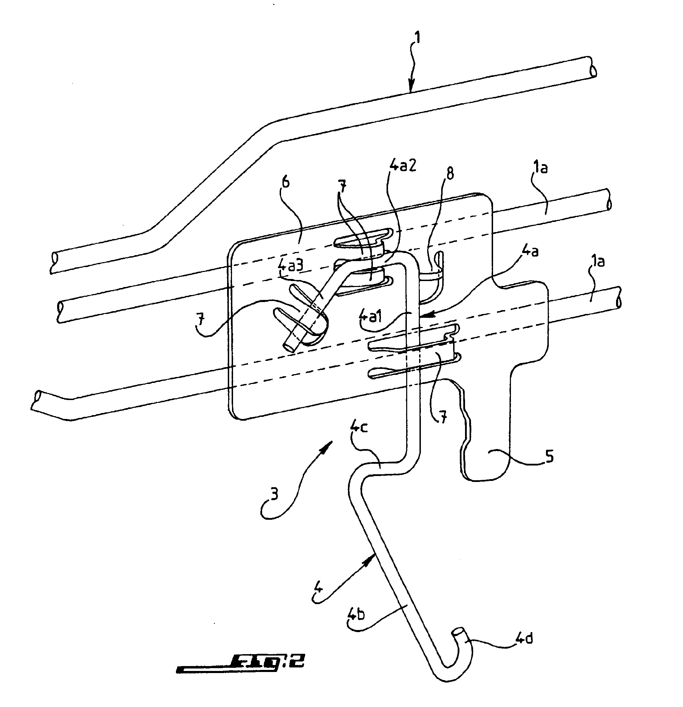

De préférence, la partie supérieure 4a de l'épingle 4 est fixée à une platine métallique 6 fixée par soudage à deux barreaux superposés la de l'armature 1 comme cela ressort plus précisément de la figure 2 de manière que la platine 6 s'étende sensiblement perpendiculairement au plan d'assise du coussin arrière.

Avantageusement, la partie supérieure 4a de l'épingle 4 est fixée à la platine 6 par des éléments 7 formant pattes et/ou brides de fixation réalisées par découpe et emboutissage de la platine 6.

Ainsi, la partie supérieure 4a de l'épingle 4 comporte une portion 4a1 s'étendant perpendiculairement au plan d'assise à partir de la partie coudée en épaulement 4c et passant sous un élément formant bride de fixation 7, une portion 4a2 recourbée à angle droit relativement à la portion 4a1 et logée entre deux éléments parallèles formant brides de maintien 7 de la portion 4a1, et une portion 4a3 prolongeant la portion coudée 4a2 en étant inclinée relativement à la portion 4a1 et formant avec cette dernière un angle aigu, la portion inclinée 4a3 étant fixée à la platine 6 par une patte de fixation 7 recouvrant la portion 4a3. Pour empêcher tout déplacement de la partie supérieure 4a de l'épingle 4 relativement à la platine 6, une patte de maintien 8 est prédécoupée et formée par emboutissage dans la platine 6 en s'étendant perpendiculairement à cette dernière de manière que la portion 4a1 de la partie supérieure 4a soit en appui sur le côté correspondant de la patte 8.

La patte 5 est solidaire de la platine 6 et formée par découpage de celle-ci.

L'extrémité libre 4d de la branche en rampe 4b de l'épingle 4 de chaque ensemble 3 est recourbée sensiblement en forme de U.

Les platines 6 ainsi que leurs pattes respectives 4, 5 respectivement des deux ensembles 3 sont situées sensiblement dans le même plan perpendiculaire au plan d'assise du coussin et ces deux ensembles sont disposés symétriquement à un plan transversal au plan d'assise et s'étendant, en position montée du coussin d'assise à la structure 2 du véhicule, en direction longitudinale du véhicule.

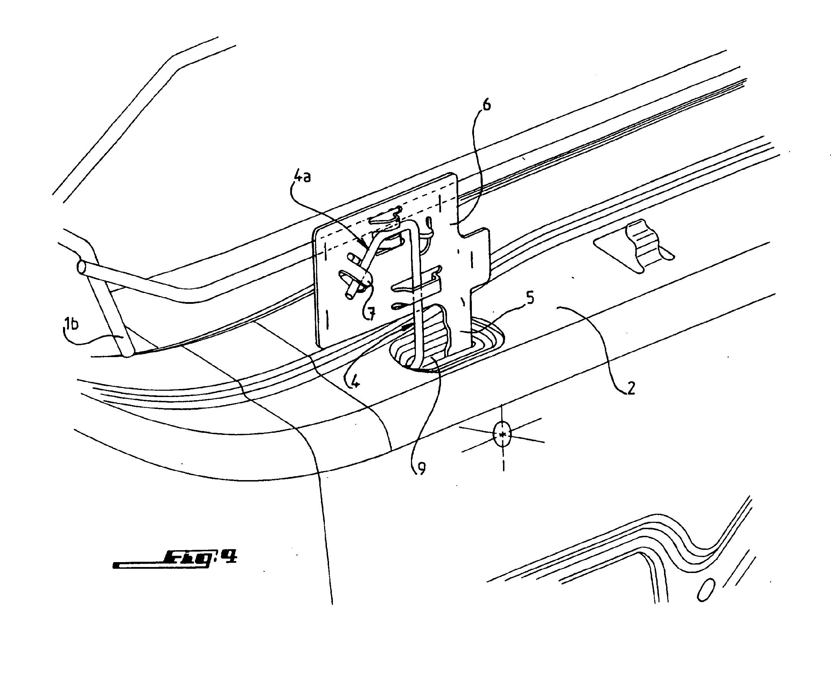

La structure 2 du véhicule comprend deux lumières oblongues 9, dont une seule est représentée en figure 4, espacées l'une de l'autre en s'étendant transversalement à l'axe longitudinal du véhicule.

Les lumières 9 servent de fixation de l'armature 1 à la structure 2 du véhicule.

Pour fixer l'armature 1 à la structure 2, l'opérateur engage les deux branches 4b des épingles 4 dans leurs lumières respectives 9 de manière que ces branches viennent en contact avec les bords d'extrémités les plus opposés des deux lumières. Puis, en continuant d'enfoncer les branches 4b dans les lumières 9, les deux pattes 5 contactent à leur tour les deux autres bords extrêmes des deux lumières 9, ce qui provoque le déplacement élastique de chaque branche 4b vers la patte correspondante 5 jusqu'à ce que la partie formant épaulement 4c de l'épingle 4 s'engage élastiquement sous le bord d'extrémité correspondant de la lumière 9, bloquant ainsi l'épingle 4 et la patte rigide 5 dans la lumière 9. A cette position de blocage, l'armature 1 est en appui sur la structure 2 du véhicule par plusieurs pieds d'armature 1b.

On comprend que chaque patte 5 sert de moyen de guidage relativement à la lumière 9 de la structure 2 lors du montage du coussin d'assise à cette structure et de reprises d'effort pour maintenir en position le coussin d'assise lors d'un choc exercé au véhicule.

Bien entendu, l'armature interne du coussin d'assise peut comporter plus de deux ensembles de fixation 3. Par exemple, l'armature d'assise peut comporter deux autres ensembles de fixation disposés latéralement et/ou du côté avant du véhicule.

Le dispositif de fixation de l'invention permet le montage de l'assise arrière d'un véhicule dans un minimum de temps, sans outil particulier tout en respectant les réglementations actuellement en vigueur.

## Revendications

1. Dispositif de fixation d'un coussin d'assise de siège arrière d'un véhicule automobile à la structure du véhicule, **caractérisé en ce qu'**il comprend au moins une épingle de fixation en fil rigide (4) comportant une partie supérieure (4a) solidaire de l'armature interne (1) du coussin et une branche inférieure en rampe élastiquement déformable (4b) raccordée à la partie supérieure (4a) par une partie formant épaulement (4c), et une patte rigide (5) solidaire de l'armature interne (1) du coussin en regard de la branche inférieure (4b) de l'épingle (4) dirigée vers la patte rigide (5), l'épingle (4) pouvant être introduite avec la patte rigide (5) dans une lumière (9) de la structure (2) du véhicule de manière que les bords d'extrémités de la lumière (9) produisent une déformation élastique de la branche inférieure (4b) de l'épingle (4) vers la patte rigide (5) jusqu'à ce que la partie formant épaulement (4c) de l'épingle (4) s'engage élastiquement sous le bord d'extrémité correspondant de la lumière (9) pour bloquer l'épingle (4) et la patte rigide (5) dans la lumière (9).

2. Dispositif selon la revendication 1, **caractérisé en ce que** l'épingle (4) est fixée par sa partie supérieure (4a) à une platine (6) solidaire de l'armature interne (1) du coussin et la patte rigide (5) est formée par découpage de la platine (6).

3. Dispositif selon la revendication 2, **caractérisé en ce que** la partie supérieure (4a) de l'épingle (4) est fixée à la platine (6) par des éléments (7) formant pattes et/ou brides de fixation réalisés par découpe et emboutissage de la platine (6).

4. Dispositif selon la revendication 2 ou 3,
**caractérisé en ce que** la platine (6) est fixée par soudage à l'armature interne (1) du coussin en s'étendant sensiblement perpendiculairement au plan d'assise du coussin.

5. Dispositif selon l'une des revendications précédentes, **caractérisé en ce qu'**il comprend deux ensembles (3) à épingles (4) et pattes rigides (5) de fixation de l'armature interne (1) du coussin à la structure (2) du véhicule situés d'un même côté arrière de cette armature et se verrouillant par encliquetage respectivement dans deux lumières (9) de la structure (2) espacées transversalement à la direction longitudinale du véhicule.

## Claims

1. A device for attaching a base cushion of a rear seat of a motor vehicle to the structure of the vehicle, **characterized in that** it comprises at least one attachment pin in rigid wire (4) including an upper portion (4a) integral with the internal frame (1) of the cushion and a lower branch as an elastically deformable ramp (4b) connected to the upper portion (4a) with a portion forming a shoulder (ac), and a rigid tab (5) integral with the internal frame (1) of the cushion facing the lower branch (4b) of the pin (4) turned towards the rigid tab (5), the pin (4) being able to be introduced with the rigid tab (5) into a lumen (9) of the structure (2) of the vehicle so that the end edges of the lumen (9) produce elastic deformation of the lower branch (4b) of the pin (4) towards the rigid tab (5) until the portion forming a shoulder (4c) of the pin (4) elastically engages under the corresponding end edge of the lumen (9) in order to block the pin (4) and the rigid tab (5) in the lumen (9).

2. The device according to claim 1, **characterized in that** the pin (4) is attached with its upper portion (4a) to a plate (6) integral with the internal frame (1) of the cushion and the rigid tab (5) is formed by cutting out the plate (6).

3. The device according to claim 2, **characterized in that** the upper portion (4a) of the pin (4) is attached to the plate (6) by elements (7) forming tabs and/or attachment brackets made by cutting out and die-stamping the plate (6).

4. The device according to claim 2 or 3,
**characterized in that** the plate (6) is attached by welding to the internal frame (1) of the cushion, while extending substantially perpendicularly to the base plane of the cushion.

5. The device according to any of the preceding claims, **characterized in that** it comprises two assemblies (3) with pins (4) and rigid tabs (5) for attaching the internal frame (1) of the cushion to the structure (2) of the vehicle located on a same rear side of this frame and being snap-locked in two lumens (9) of the structure (2), respectively, spaced apart transversely to the longitudinal direction of the vehicle.

## Patentansprüche

1. Vorrichtung zur Befestigung eines Sitzkissens für den Hintersitz eines Kraftfahrzeuges an der Struktur des Fahrzeuges, **dadurch gekennzeichnet, dass** sie zumindest eine Befestigungsklammer aus starrem Draht (4) umfasst, die einen oberen Teil (4a) umfasst, der fest mit der Innenarmatur (1) des Kissens verbunden ist, und einen unteren Zweig als elastisch verformbare Rampe (4b), die mit dem oberen Teil (4a) durch ein eine Schulter bildendes Teil (4c) verbunden ist, und eine starre Klaue (5), die fest verbunden ist mit der Innenarmatur (1) des Kissens gegenüber dem unteren Zweig (4b) der Klammer (4), die zur starren Klaue (5) orientiert ist, wobei die Klammer (4) derart mit der starren Klaue (5) in eine Öffnung (9) der Struktur (2) des Fahrzeuges eingesteckt werden kann, dass die Endränder der Öffnung (9) eine elastische Verformung des unteren Zweiges (4b) der Klammer (4) zur starren Klaue (5) erzeugen, bis der die Schulter bildende Teil (4c) der Klammer (4) elastisch unter den entsprechenden Endrand der Öffnung (9) eingreift, um die Klammer (4) und die starre Klaue (5) in der Öffnung (9) zu blockieren.

2. Vorrichtung nach Anspruch 1, **dadurch gekennzeichnet, dass** die Klammer (4) durch ihren oberen Teil (4a) an einer Platte (6) befestigt ist, die fest mit der Innenarmatur (1) des Kissens verbunden ist, und die starre Klaue (5) durch Zuschneiden der Platte (6) gebildet ist.

3. Vorrichtung nach Anspruch 2, **dadurch gekennzeichnet, dass** der obere Teil (4a) der Klammer (4) durch Elemente (7) an der Platte (6) befestigt ist, die Befestigungsklauen und/oder -flansche bilden, die durch Zuschneiden und Ausstanzen der Platte (6) realisiert sind.

4. Vorrichtung nach Anspruch 2 oder 3, **dadurch gekennzeichnet, dass** die Platte (6) durch Schweißen an die Innenarmatur (1) des Kissens befestigt ist, wobei sie sich leicht senkrecht zur Sitzebene des Kissens erstreckt.

5. Vorrichtung nach einem der vorhergehenden Ansprüche, **dadurch gekennzeichnet, dass** sie zwei Einheiten (3) mit Klammern (4) und starren Klauen (5) zur Befestigung der Innenarmatur (1) des Kissens an der Struktur (2) des Fahrzeuges umfasst, die sich an einer selben hinteren Seite von dieser Armatur befinden und die sich durch jeweiliges Einklinken in zwei Öffnungen (9) der Struktur (2) verriegeln, die quer zur Längsrichtung des Fahrzeuges beabstandet sind.
